# EUROPÄISCHE PATENTSCHRIFT

(11) **EP 2 248 721 B1**
(45) Veröffentlichungstag und Bekanntmachung des Hinweises auf die Patenterteilung: **17.04.2013**
(21) Anmeldenummer: 10405086.9
(22) Anmeldetag: 22.04.2010
(51) Int. Cl.: B65B 9/06, B65B 25/14, B65B 51/30, B29C 65/00

(54) **Vorrichtung und Verfahren zum Verpacken von Objekten**
Device and Method for Packaging Objects
Dispositif et procédé d'emballage d'objets

(30) Priorität: 28.04.2009 CH 6662009; 06.07.2009 CH 10452009
(43) Veröffentlichungstag der Anmeldung: 10.11.2010
(73) Patentinhaber: Ferag AG, 8340 Hinwil (CH)
(72) Erfinder: Dax, Roman, 8344 Bäretswil (CH); Luginbuehl, Thomas, 6438 Ibach (CH)
(74) Vertreter: Frei Patent Attorneys

(56) Entgegenhaltungen:
- EP-A- 0 368 095
- EP-A- 0 537 844
- EP-A- 0 894 721
- WO-A-2005/118402
- DE-U- 1 915 044
- GB-A- 1 274 832

## Beschreibung

Die Erfindung liegt auf dem Gebiete der Verpackungstechnik und betrifft eine Vorrichtung und ein Verfahren zum Verpacken von flachen Objekten nach dem Oberbegriff der entsprechenden unabhängigen Patentansprüche. Die erfindungsgemässe Vorrichtung dient zum Verpacken von flachen Objekten, beispielsweise von Druckereiprodukten oder von stapelförmigen Gruppen von Druckereiprodukten. Es können einzelne oder Stapel aus Druckereiprodukten und anderen flachen Gegenständen, wie beispielsweise CDs, Mustergegenständen oder Musterbeuteln, verpackt werden.

Es ist bekannt, flache Objekte der oben genannten Art mit Hilfe einer quasi endlosen Verpackungsmaterialbahn, z.B. ab Rolle zugeführte Kunststofffolie, Folie aus Naturmaterialien (Ökofolie) oder Papier, zu verpacken. Dabei wird eine solche Verpackungsmaterialbahn um die in einer Reihe hintereinander und voneinander beabstandet geförderten Objekte gelegt, oder es wird einer solchen Reihe beidseitig eine Verpackungsmaterialbahn zugeführt. Dann wird die Verpackungsmaterialbahn in Längsrichtung auf der Oberseite der Reihe oder seitlich davon in Längsnähten und zwischen je zwei aufeinanderfolgenden Objekten quer zur Längsrichtung in Quemähten verschlossen. Gegebenenfalls werden die auf diese Weise allseitig vom Verpackungsmaterial umschlossenen Objekte unmittelbar nach der Erstellung der Quemähte oder gleichzeitig damit auch voneinander getrennt.

Bei Verwendung von Kunststofffolie als Verpackungsmaterial werden die Längs-und Quernähte üblicherweise durch Schweissen hergestellt, wobei das Trennen der verpackten Objekte gleichzeitig mit der Erstellung der Quemähte durchgeführt werden kann.

Für Bearbeitungsoperationen, wie Schweissen, Kleben etc., werden die Objekte in eine Bearbeitungsvorrichtung gefördert und aus dieser wieder weggefördert. Die Bearbeitungsvorrichtung ist vorteilhafterweise derart ausgerüstet, dass die Förderung der zu verpackenden Objekte für die Bearbeitung nicht unterbrochen werden muss sondern kontinuierlich betrieben werden kann. Die Objekte liegen daher normalerweise auf einer Förderauflage einer Fördereinheit auf und werden auf dieser in und durch den Bearbeitungsbereich der Bearbeitungsvorrichtung bewegt.

Entsprechende Bearbeitungsvorrichtungen sind aus der WO 2005/118402, WO 2007/147269 oder der WO 2009/039 673 bekannt. Bei den dort beschriebenen Schweissvorrichtungen haben die Schweisswerkzeuge seitlich von der bearbeitungsaktiven Zone (dem heissen Schweissbalken) angeordnete Niederhalter. Diese dienen dazu, die Verpackungsmaterialbahn im Bereich zwischen zwei benachbarten, aber voneinander beabstandeten Objekten und in unmittelbarer Nähe der zu erstellenden Schweissnaht gegen die Förderfläche zu drücken. Die Niederhalter sind so eingerichtet, dass die beiden zu verbindenden Bereiche der Materialbahn zuerst beidseitig der vorgesehenen Schweissnaht gegeneinander und gegen die Förderfläche gedrückt werden. Erst dann wird die heisse bearbeitungsaktive Zone auf das Material abgesenkt. Durch diese Verpackungsmaterialbahn-Niederhalter wird das Verpackungsmaterial unmittelbar vor dem Schweissvorgang glatt gehalten und die Qualität der Verbindung verbessert.

Folgendes Problem tritt jedoch trotz der bekannten Verpackungsmaterialbahn-Niederhalter auf: Das Bearbeitungswerkzeug übt zum Bearbeiten eine gewisse Kraft auf die Verpackungsmaterialbahn und damit indirekt auch auf die Förderauflage aus. Die Förderauflage ist in der Regel nachgiebig. Beispielsweise handelt es sich um ein Förderband eines Bandförderers, das unter Belastung nachgeben kann. Das Förderband kann auch eine komprimierbare Schicht aufweisen. Die Nachgiebigkeit der Förderauflage führt vor allem bei schwereren Objekten, z.B. Stapeln aus verschiedenen Druckereiprodukten, dazu, dass sich die Objekte in der Verpackungsmaterialbahn verschieben können, wenn der Druck durch das Bearbeitungswerkzeug nachlässt und die Förderauflage zurückfedert. Dadurch wird die frische, noch weiche Schweissnaht belastet und evtl. beeinträchtigt. Es kann dabei auch passieren, dass sich einzelne Verpackungseinheiten, also einzelne in Beutel aus Verpackungsmaterial verpackte Objekte, auf der Förderfläche verschieben. Dies ist vor allem für die weiterverarbeitenden Schritte, wie z.B. Ergreifen der einzelnen Verpackungseinheiten, nachteilig.

Der Erfindung liegt daher die Aufgabe zugrunde, eine Vorrichtung und ein Verfahren anzugeben, bei der bzw. bei dem die genannten Probleme vermieden werden. Insbesondere soll eine gute Kontrolle der Lage der Objekte zu jedem Zeitpunkt vor, während und nach der Bearbeitung gewährleistet sein.

Die Aufgabe wird gelöst durch eine Vorrichtung mit den Merkmalen von Anspruch 1 sowie durch ein Verfahren mit den Merkmalen von Anspruch 15. Vorteilhafte Weiterbildungen ergeben sich aus den abhängigen Ansprüchen, der Beschreibung und den Zeichnungen.

Die erfindungsgemässe Vorrichtung zum Verpacken von Objekten, insbesondere flachen und/oder flexiblen Produkten, wie z.B. Druckereiprodukten, in ein

Verpackungsmaterial umfasst eine Fördereinheit mit einer Förderauflage, die eine im Wesentlichen ebene Förderfläche hat. Die Fördereinheit ist imstande, die flachen Objekte hintereinander und voneinander beabstandet in einer Förderrichtung zu fördern. Ausserdem ist wenigstens ein Bearbeitungswerkzeug mit einer bearbeitungswirksamen Zone vorhanden. Das Bearbeitungswerkzeug ist imstande, in einem Bearbeitungsbereich der Vorrichtung die Verpackungsmaterialbahn im Bereich zwischen zwei Objekten zu bearbeiten, insbesondere Verbindungen zwischen dem unteren und oberen Bereich der Verpackungsmaterialbahn herzustellen, wenn die Verpackungsmaterialbahn die Objekte beidseitig bedeckt. Als oberer Bereich wird hier der von der Förderfläche abgewandte Bereich bezeichnet, der untere Bereich liegt auf der Förderfläche auf. Zum Bearbeiten ist das Bearbeitungswerkzeug zumindest senkrecht zur Förderfläche beweglich, auch mit einer Bewegungskomponente in Förderrichtung. Erfindungsgemäss ist wenigstens ein Objekt-Niederhalter vorgesehen. Der Objekt-Niederhalter ist derart ausgebildet, dass er im Bearbeitungsbereich wenigstens eines der Objekte, das an die Bearbeitungsstelle angrenzt, durch Niederhalten beruhigen kann. Er kann das Objekt gegen die Förderfläche drücken, zumindest wenn der Abstand der von der Förderfläche abgewandten Objektoberseite von der Förderfläche oder von der bearbeitungsaktiven Zone einen vorbestimmten Wert überschreitet, z.B. bei Überschreiten einer kritischen Objektdicke. Der Objekt-Niederhalter kann also gegebenenfalls eine Gegenkraft auf wenigstens ein Objekt ausüben. Diese Gegenkraft wirkt dem Wegspringen der Objekte von der Förderfläche entgegen, wenn die Förderfläche in ihre Ausgangslage zurückkehrt bzw. darüber hinaus nach oben federt. Die Kraft, die durch die ausgelenkte Förderfläche auf die Objekte ausgeübt wird, kann damit durch den Niederhalter kompensiert werden. Die Objekte werden somit durch den Objekt-Niederhalter kontrolliert geführt bzw. auf der Förderauflage gehalten. Bei dünnen Objekten kann es vorkommen, dass der Objekt-Niederhalter erst auf das Objekt wirkt, wenn der Abstand bzw. die Höhendifferenz zwischen der von der Förderfläche abgewandte Objektoberseite und der Förderfläche oder der bearbeitungsaktiven Zone einen vorbestimmten Wert überschreitet. Diese vorbestimmte Wert entspricht beispielsweise einer kritischen Objektdicke, kann aber auch kleiner oder Null sein.

Das erfindungsgemässe Verfahren hat die folgenden Schritte:
- Fördern der Objekte hintereinander und voneinander beabstandet in einer Förderrichtung durch einen Bearbeitungsbereich, wobei die Verpackungsmaterialbahn die Objekte beidseitig bedeckt;
- Bewegen des Bearbeitungswerkzeugs im Bearbeitungsbereich zumindest senkrecht zur Förderfläche und mit einer Bewegungskomponente in Förderrichtung und synchrones Bewegen des am Bearbeitungswerkzeug befestigten Objekt-Niederhalters mit dem Bearbeitungswerkzeug;
- Bearbeiten der Verpackungsmaterialbahn im Bereich zwischen zwei Objekten, insbesondere Herstellen von Verbindungen zwischen einem der Förderfläche abgewandten oberen Bereich und einem der Förderfläche zugewandten unteren Bereich der Verpackungsmaterialbahn;
- Beruhigen wenigstens eines der Objekte durch Niederhalten mit einem Objekt-Niederhalter, wobei das Objekt bei Überschreiten einer kritischen Objektdicke oder Auslenkung gegen die Förderfläche gedrückt wird.

Durch die Erfindung und insbesondere durch die Objekt-Niederhalter werden die Objekte bzw. die fertigen Verpackungseinheiten zu jedem Zeitpunkt der Bearbeitung auf einfache Weise gegen Verschiebungen gesichert. Derartige Verschiebungen können durch ein Zurückfedern der Förderfläche, die in der Regel nachgiebig ist und durch das Werkzeug ausgelenkt und/oder verformt wird, bei Nachlassen des Bearbeitungsdrucks hervorgerufen werden. Die Lage der Objekte ist zu jedem Zeitpunkt der Bearbeitung somit gut kontrollierbar. Hierdurch wird beispielsweise auch verhindert, dass im Fall des Schweissens die noch weiche Schweissnaht belastet wird und sich wieder öffnen kann.

Anders als die bereits bekannten Verpackungsmaterialbahn-Niederhalter wirkt der Objekt-Niederhalter im Bereich der Objekte und nicht im Verpackungsmaterialbahnbereich zwischen zwei Objekten. Der Objekt-Niederhalter ist daher so ausgebildet und angeordnet, dass er in Förderrichtung gesehen mit dem Objekt in einem Abstand von der bearbeitungsaktiven Zone zusammenzuwirken imstande ist, der grösser ist als der halbe Abstand zwischen zwei Objekten (gemessen zwischen der Nachlaufkante eines Objekts und der Vorlaufkante des nachfolgenden Objekts).

Es ist nicht zwingend notwendig, dass der Objekt-Niederhalter bei der Bearbeitung eine Kraft auf die Objekte ausübt. Es reicht, wenn er ein Wegspringen des Objekts von der Förderfläche verhindert. Seine Wirkfläche, z.B. seine der Förderfläche zugewandte Unterseite, kann also im unbelasteten Zustand einen vorbestimmten Abstand von der Förderfläche haben und der weiteren Vergrösserung dieses Abstands durch ein zurückspringendes Objekt einen gewissen Widerstand entgegensetzen. Dieser Abstand ist vorzugsweise so gewählt, dass Objekte mit einer vorbestimmten (Standard-)Dicke vom Objekt-Niederhalter gerade berührt werden, aber keine gegenseitigen Kräfte ausgeübt werden.

Der Objekt-Niederhalter ist vorzugsweise federnd. Er ist beispielsweise in sich federnd (z.B. Formelastizität, komprimierbares Material) und/oder federnd an einem Halteelement, z.B. dem Werkzeugträger, angebracht. Seine Federkonstante ist vorzugsweise kleiner als die der Förderfläche: Wenn ein Objekt zwischen dem Niederhalter nach. Andererseits ist die Federkonstante vorzugsweise gross genug, um das Objekt zuverlässig zu führen und positionieren zu können.

Der Objekt-Niederhalter ist am Werkzeugträger befestigt und wird auf diese Weise synchron mit diesem bewegt. Ein eigener Antrieb des Objekt-Niederhalters entfällt dadurch. Falls ein zusätzlicher Verpackungsmaterialbahn-Niederhalter (siehe unten) vorhanden ist, kann der Objekt-Niederhalter auch an diesem befestigt sein.

Das Bearbeitungswerkzeug wird wenigstens mit einer Geschwindigkeitskomponente senkrecht zur Förderrichtung bewegt (Absenken und wieder Anheben auf die Förderfläche). Dabei ist zusätzlich auch eine Bewegung in Förderrichtung vorhanden. Dazu wird das Bearbeitungswerkzeug bzw. seine bearbeitungsaktive Zone wird vorzugsweise entlang einer geschlossenen Umlaufbahn bewegt, welche im Bearbeitungsbereich in unmittelbarer Nähe zur Förderfläche verläuft, bevorzugt im Wesentlichen parallel zu dieser. Die Geschwindigkeitskomponente in Förderrichtung ist dabei vorzugsweise im Wesentlichen so gross wie die Fördergeschwindigkeit der Objekte.

Besonders bevorzugt ist die Orientierung des Bearbeitungswerkzeugs steuerbar. Beispiele, wie dies realisiert werden kann, sind in den oben erwähnten Anmeldungen WO 2007/147269 und WO 2009/039673 beschrieben. Steuerbare Bearbeitungswerkzeuge haben den Vorteil, dass sie gezielt zwischen auch dickeren Objekten auf die Materialbahn aufsetzen können. Daher kann der Objektabstand reduziert werden, was Materialersparnis, höhere Förderraten und/oder reduzierte Fördergeschwindigkeiten ermöglicht.

Durch eine gebogene Form der Wirkfläche des Niederhalters ist es möglich, dass der Niederhalter an der Objektoberseite oder einer fiktiven Fläche, die in einem vorbestimmten Abstand von der Förderfläche verläuft, abrollt, wenn der Niederhalter eine Kreisbewegung oder eine Bewegung entlang einer gekrümmten Bewegungsbahn macht.

Bevorzugt ist zusätzlich zum Objekt-Niederhalter auch wenigstens ein Verpackungsmaterialbahn-Niederhalter vorhanden. Dieser wirkt im Bereich zwischen zwei Objekten auf die Verpackungsmaterialbahn und drückt ihre oberen und unteren Bereiche gegen die Förderfläche, bevor die bearbeitungsaktive Zone des Bearbeitungswerkzeugs auf die Verpackungsmaterialbahn drückt. Der Verpackungsmaterialbahn-Niederhalter ist vorzugsweise so gestaltet, wie in der WO 2005/118402 beschrieben.

In einer bevorzugten Variante der Erfindung wird verhindert, dass die Verpackungsmaterialbahn nach der Bearbeitung am Bearbeitungswerkzeug kleben bleibt. Dies kann vor allem beim Schweissen einer Verpackungsmaterialbahn auftreten, wenn die Bahn aufgrund eines Fehlers in der Objektzuführung keine Objekte umschliesst, so dass Leersäcke gebildet werden. Diese sind sehr leicht und können daher vom Bearbeitungswerkzeug mitgenommen werden, auch wenn sie nur leicht an diesem haften bleiben. Ähnliches kann unter Umständen bei sehr leichten Objekten passieren. Hierdurch werden Fehler verursacht, beispielsweise wenn die Leersäcke bzw. leichten Objekte sich später unkontrolliert vom Bearbeitungswerkzeug lösen. Auf mechanischem Weg, vorzugsweise durch das Einblasen von Druckluft in den Bearbeitungsbereich mittels einer Blasluftzuführung, werden eventuell am Bearbeitungswerkzeug, z.B. am Verpackungsmaterialbahn-Niederhalter, haften bleibende Teile der Verpackungsmaterialbahn wieder abgelöst und gegen die Förderfläche bewegt. Damit werden auch Leersäcke oder sehr leichte umhüllte Objekte sicher auf der Förderfläche weitergefördert.

Die Druckluft-Austritte (Düsen) sind vorzugsweise im oder am Verpackungsmaterialbahn-Niederhalter angeordnet. Sie blasen Luft vorzugsweise senkrecht zur Ebene des Verpackungsmaterials bzw. zur Förderfläche. Als Alternative sind mechanische Ablöseelemente denkbar. Vorzugsweise wird die Blasluft zusätzlich auch zum Kühlen des Verpackungsmaterialbahn-Niederhalters verwendet. Denn es hat sich herausgestellt, dass die Haftung des Niederhalters an der Materialbahn insbesondere im Fall einer Folie durch Kühlen verringert wird. Zwecks Durchleiten bzw. Zirkulation der Luft kann der Verpackungsmaterialbahn-Niederhalter in seinem Inneren Kanäle aufweisen, durch die die Blasluft geleitet wird, insbesondere etwa in Richtung der aktiven Kante des Niederhalters. Wenn zwei vor- bzw. nachlaufende Niederhalter vorhanden sind, können die entsprechenden Kanäle durch Schläuche oder andere Leitungen miteinander verbunden sein, so dass ein gemeinsamer Anschluss an die Druckluftquelle ausreicht. Ein Teil der Luft wird durch geeignete Öffnungen (Düsen) auf die Materialbahn geleitet. Alternativ kann auch der gesamte Luftstrom austreten.

Die hier beschriebenen luftgekühlten Verpackungsmaterialbahn-Niederhalter, bei denen die Luft ganz oder teilweise austritt und zum Ablösen der Verpackungsmaterialbahn verwendet wird, sind mit Vorteil auch bei Bearbeitungswerkezeugen ohne Objekt-Niederhalter einsetzbar. Gleiches gilt für das Verfahren gemäss Anspruch 20. Insbesondere wird die zum Kühlen verwendete Luft vorteilhaft einem Doppelnutzen zugeführt, nämlich gleichzeitig auch zum Wegstossen der Bahn verwendet.

Die Bearbeitungswerkzeuge können an einem starren Drehkörper, z.B. einem Rad, angebracht sein und entlang einer Kreisbahn bewegt werden. Es ist aber auch ein Umlaufsystem mit beliebig geformter Umlaufbahn möglich. Dabei können die Bearbeitungswerkzeuge auch einzeln angetrieben sein, um verschiedene Bahngeschwindigkeiten und Bearbeitungsabstände zu realisieren.

Als Gegenwerkzeug kann die Förderauflage dienen. Alternativ kann auch ein stationäres oder mitbewegtes (z.B. entlang einer spiegelsymmetrischen Umlaufbahn) Gegenwerkzeug eingesetzt werden. Die Förderauflage kann im Bearbeitungsbereich unterbrochen sein oder um das Gegenwerkzeug herum geführt sein.

Die Bearbeitungswerkzeuge können Schweissbalken zum Wärme- oder Ultraschallschweissen, Anpressbügel zum Verbinden vorgeleimter Stellen, eine Prägeeinrichtung oder eine Trennvorrichtung zum Trennen benachbarter Verpackungseinheiten umfassen. Die Verpackungsmaterialbahn ist beispielsweise eine Kunststofffolie, eine Folie aus Naturmaterial oder Papier.

Die Dicke des Objekts ist ein wichtiger Faktor, der das Gewicht der Objekte bestimmt. Ein federnder und/oder federnd gelagerter Objekt-Niederhalter übt eine Gegenkraft auf die Objekte aus, die proportional zu seiner Auslenkung und damit dickenabhängig ist. Bei geeigneter Dimensionierung des Objekt-Niederhalters kann daher eine Kompensation der auf das Objekt wirkenden Kräfte erreicht werden.

Die Objekt-Niederhalter können quer zur Förderrichtung in einzeln federnde Komponenten unterteilt sein, z.B. mehrere nebeneinander liegende federnde Rollen statt einer federnden Walze, mehrere nebeneinander liegende federnde Finger statt einem einheitlichen gebogenen federnden Element. Hierdurch können Dickenvariationen innerhalb desselben Objekts ausgeglichen werden.

Die Verpackungsmaterialbahn wird durch eine geeignete Förder- und Umlegeinrichtung synchron mit den Objekten gefördert und um die Objekte zu einem Schlauch umgelegt. Alternativ werden zwei oder mehrere Verpackungsmaterialbahnteile von oben und unten an die Objekte herangeführt.

Beispiele der Erfindung sind in den Zeichnungen dargestellt und im Folgenden beschrieben. Es zeigen rein schematisch:
- Fig. 1: eine Verpackungsvorrichtung in einer Ansicht quer zur Förderrichtung, wobei die Bearbeitungswerkzeuge der Vorrichtung Verpackungsmaterialbahn-Niederhalter und daran befestigte Objekt- Niederhalter in Form von gebogenen Elementen aufweisen;
- Fig.2: eine Verpackungsvorrichtung ähnlich zu Fig. 1, wobei die Bearbeitungswerkzeuge in ihrer Orientierung steuerbar sind;
- Fig. 3a: eine perspektivische Ansicht der Vorrichtung gemäss Fig. 2;
- Fig. 3b: eine Schnittansicht eines Verpackungsmaterialbahn-Niederhalters aus Fig. 3a;
- Fig. 4: ein Ausschnitt aus einer Vorrichtung gemäss Fig. 2 mit zwei Ansichten eines Bearbeitungswerkzeugs bei der Bearbeitung;
- Fig. 5: ein weiteres Beispiel für ein Bearbeitungswerkzeug mit einem Objekt- Niederhalter in Form eines gebogenen Elements, das am Werkzeugträger befestigt ist;
- Fig. 6: ein weiteres Beispiel für ein Bearbeitungswerkzeug mit einem Objekt- Niederhalter in Form einer federnd gelagerten Walze oder mehrerer nebeneinander liegender Rollen;
- Fig. 7: ein weiteres Beispiel für ein Bearbeitungswerkzeug mit einem Objekt- Niederhalter in Form eines federnd gelagerten Stempels.

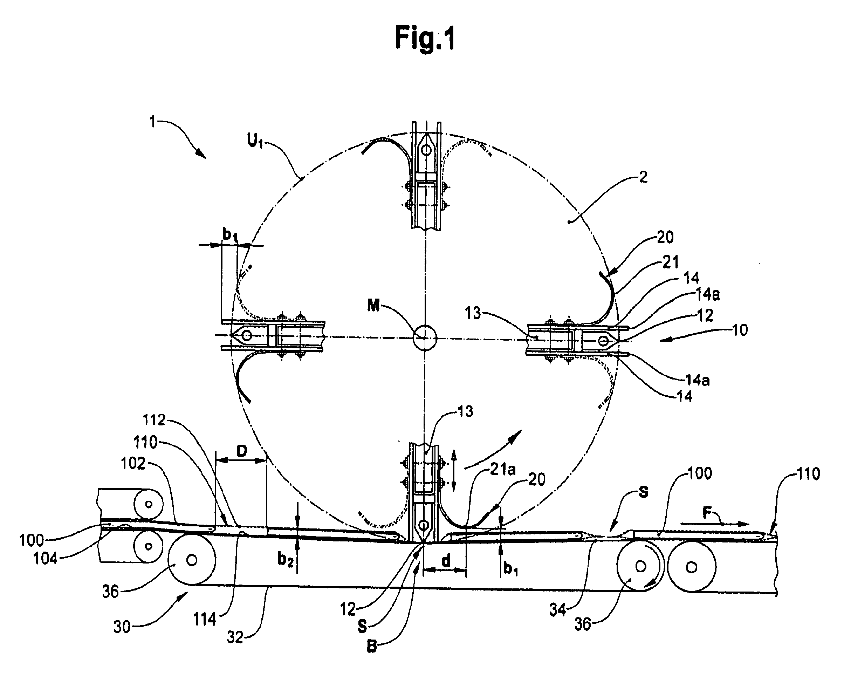

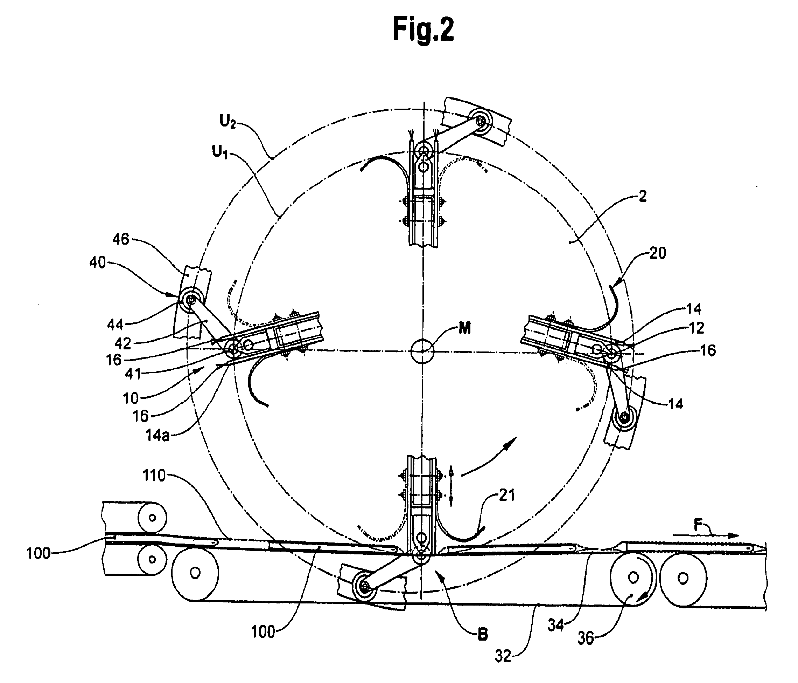

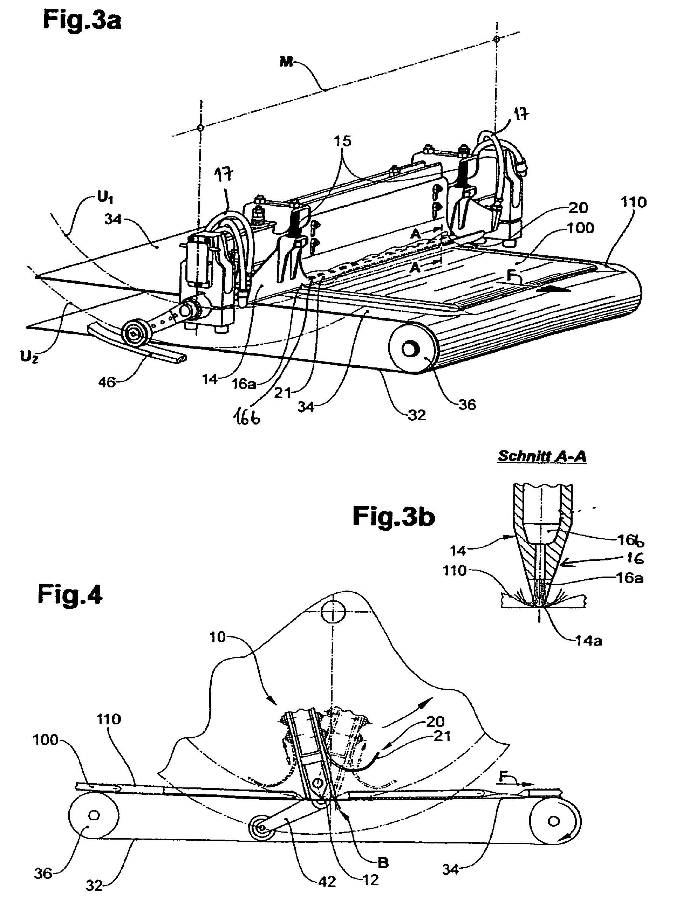

Fig. 1 zeigt eine Ansicht einer Verpackungsvorrichtung 1 quer zur Förderrichtung F. Fig. 2 und 3a+b zeigen eine leicht abgewandelte Vorrichtung 1 in Seitenansicht bzw. perspektivischer Darstellung. Im Folgenden werden die Gemeinsamkeiten beider Vorrichtungen 1 beschrieben:

Die Vorrichtung 1 umfasst beispielhaft vier Bearbeitungswerkzeuge 10, die an einem Drehkörper 2 angebracht und entlang einer kreisförmigen Umlaufbahn U1 um ein Drehzentrum M bewegt werden. Die Bearbeitungswerkzeuge 10 sind in Fig. 1 radial zum Drehzentrum M ausgerichtet. Bei Fig. 2 und 3a+b kann die Orientierung der Bearbeitungswerkzeuge 10 relativ zur radialen Richtung verändert werden. Die Bearbeitungswerkzeuge 10 umfassen jeweils eine bearbeitungsaktive Zone 12, hier beispielhaft einen Schweissbalken, die an einem Werkzeugträger 13 gelagert ist. Sie umfassen ausserdem jeweils zwei Verpackungsmaterialbahn-Niederhalter 14, die jeweils seitlich von der bearbeitungsaktiven Zone 12 angeordnet und in radialer Richtung relativ zu dieser bzw. zum Werkzeugträger 13 federnd (Federn 15, Fig. 3) beweglich sind. Im unbelasteten Zustand stehen die Verpackungsmaterialbahn-Niederhalter 14 in radialer Richtung über die bearbeitungsaktiven Zone 12 hinaus (Situation bei 12, 3 und 9 Uhr in Fig. 1+2). Unter Belastung (Gegendruck durch die Förderfläche 34) federn sie so weit zurück, dass sich die bearbeitungsaktive Zone 12 in der Ebene ihrer radial aussen liegenden Kanten 14a befindet oder darüber hinaussteht (Situation bei 6 Uhr in Fig. 1+2).

Je Bearbeitungswerkzeug 10 ist wenigstens ein Objekt-Niederhalter 20 vorhanden, der hier beispielhaft der bearbeitungsaktiven Zone 12 in Umdrehungsrichtung vorläuft. Bevorzugt ist zusätzlich ein nachlaufender Objekt-Niederhalter 20 vorhanden (gestrichelt gezeichnet). Der Objekt-Niederhalter 20 besteht in diesem Beispiel aus einem in der Seitenansicht rinnenartig gebogenen Element 21, das mit Bezug auf die Fördereinrichtung 30 konkav gebogen ist. Das Element 21 ist am vor- bzw. nachlaufenden Verpackungsmaterialbahn-Niederhalter 14 befestigt. Er kann dadurch mit diesem in radialer Richtung relativ zur bearbeitungsaktiven Zone 12 verschoben werden, wenn der Verpackungsmaterialbahn-Niederhalter 14 einfedert.

Wie Fig. 2 und 3a+b schematisch zeigen, weisen die Verpackungsmaterialbahn-Niederhalter 14 mehrere Druckluftdüsen 16 auf. Die Düsenöffnungen 16a sind entlang der Kanten 14a der Verpackungsmaterialbahn-Niederhalter 14 angeordnet. Die Druckluft wird im Inneren des Verpackungsmaterialbahn-Niederhalters 14 in Kanälen 16b geführt, die hier beispielhaft parallel zur aktiven Kante 14a des Niederhalters verlaufen. Hierdurch wird der Verpackungsmaterialbahn-Niederhalter 14 gleichzeitig gekühlt. Die Luftkanäle 16b in den beiden vor- und nachlaufenden Verpackungsmaterialbahn-Niederhaltern 14 eines Werkzeugs sind durch Schläuche 17 miteinander verbunden, so dass eine gemeinsame Druckluft-Zuführung ausreicht.

Die Eintrittsstelle der Druckluft ist vorliegend beispielhaft im in Förderrichtung F rechten Bereich des Werkzeugs und der Austritt an der gegenüberliegenden Stelle.

Fig. 3b zeigt einen Schnitt entlang der Linie A-A in Fig. 3a. Die Ausströmrichtung der Luft ist in der Ebene des Verpackungsmaterialbahn-Niederhalters 14 und im Wesentlichen senkrecht zur Verpackungsmaterialbahn 110.

Unterhalb des Drehkörpers 2 befindet sich eine Fördereinrichtung 30, hier in Form eines Bandförderers. Sie umfasst ein Förderband 32, das um wenigstens zwei Rollen 36 umgelenkt wird. Sein oberes Trum definiert eine weitgehend ebene Förderfläche 34 für darauf aufliegende Objekte 100. Sie werden in Förderrichtung F bewegt. Im Bereich zwischen den Rollen 36 ist das Förderband 32 nachgiebig, d.h. kann sich unter Belastung durchbiegen. Das Förderband 32 kann auch in sich verformbar sein, beispielsweise indem es eine komprimierbare Dämpfungsschicht aufweist. Das Förderband 32 bzw. die Förderfläche 34 wirkt als Gegenwerkzeug für die Bearbeitungswerkzeuge 10. Es ist tangential zur Bewegungsbahn U1 der bearbeitungsaktiven Zone 12 orientiert. Der Bereich der grössten Annäherung zwischen der Bewegungsbahn U1 und der Förderfläche 34 wird als Bearbeitungsbereich B bezeichnet.

Auf dem Förderband 32 werden Objekte 100 liegend in einer Reihe hintereinander gefördert. Der Abstand zwischen zwei aufeinander folgenden Objekten 100 (also die Lücke zwischen zwei Objekten 100) ist mit D bezeichnet. Die Objekte 100 sind an ihrer Ober- und Unterseite 102, 104 von einer Materialbahn 110 bedeckt. Sie sind beispielsweise in einen Schlauch aus einer in Förderrichtung umgelegten Materialbahn 110 eingeschlagen oder von zwei Teil-Materialbahnen bedeckt. Die Bearbeitungswerkzeuge 10 sind so ausgelegt, dass Verbindungen S zwischen dem oberen und unteren Bereich 112, 114 der Materialbahn 110 im Bereich zwischen zwei Objekten 100 hergestellt werden können. Die Verbindungen S sind hier quer zur Förderrichtung F orientiert, könnten aber auch eine andere Orientierung haben, z.B. in Längsrichtung. Es handelt sich insbesondere um Schweissnähte. Unmittelbar nach oder beim Verbinden der oberen und unteren Materialbahnbereiche 112, 114 können die Verpackungseinheiten entlang der Verbindungen S getrennt werden.

Der Bereich des gebogenen Teils 21, dessen Abstand vom Drehzentrum M am grössten ist, ist mit Bereich 21 a bezeichnet. Der radiale Abstand zwischen der Ebene durch die Kanten 14a und dem Bereich 21a ist mit b1 bezeichnet. Er entspricht in diesem Beispiel ungefähr einer kritischen Objektdicke b2 oder ist grösser als eine Objektdicke b2. Die Verpackungsmaterialbahn-Niederhalter 14 können zusammen mit dem Objekt-Niederhalter 20 gegenüber der bearbeitungsaktiven Zone 12 zurückfedern.

In Förderrichtung F oder Umfangsrichtung des Drehkörpers 2 gesehen hat der Bereich 21 a einen Abstand d von der bearbeitungsaktiven Zone 12. Der Abstand d ist grösser als der halbe Abstand D zwischen zwei Objekten 100. Dadurch ist gewährleistet, dass der Objekt-Niederhalter 20 tatsächlich mit dem Objekt 100 zusammenwirkt und nicht nur mit der Materialbahn 110 im Bereich zwischen den Objekten 100.

Die Vorrichtung funktioniert wie folgt: Der Drehkörper 2 und die Fördereinrichtung 30 werden derart angetrieben, dass die Objekte 100 auf dem Förderband 32 und die bearbeitungsaktiven Zonen 12 der Bearbeitungswerkzeuge 10 mit der gleichen Bahngeschwindigkeit bewegt werden. Die Bearbeitungswerkzeuge 10 treffen auf die Lücken zwischen zwei Objekten 100. Die über die Umlaufbahn U1 hervorstehenden Kanten 14a der Verpackungsmaterialbahn-Niederhalter 14 treffen im Bearbeitungsbereich B zuerst auf den oberen Bereich 112 der Materialbahn 110, dann auf den unteren Bereich 114. Hierdurch wird die Materialbahn 110 zwischen den beiden Niederhaltern 14 und wenigstens über dem vorlaufenden Objekt 100 geglättet. Durch Gegendruck der Förderfläche 34 federn die Verpackungsmaterialbahn-Niederhalter 14 ein, die bearbeitungsaktive Zone 12 trifft auf die Materialbahn 110 und die Verbindung S wird erstellt. Durch den Druck des Bearbeitungswerkzeugs 10 bewegt sich auch die Förderauflage 34 etwas nach unten, d.h. vom Drehzentrum M weg. Beim Weiterdrehen löst sich die bearbeitungsaktive Zone 12 von der Materialbahn 110, die Verpackungsmaterialbahn-Niederhalter 14 federn in ihre Ausgangsposition, und der Druck auf die Förderauflage 34 lässt nach. Die Förderauflage 34 kehrt ebenfalls in ihre Ausgangsposition zurück.

Durch die aus den Düsen 16 ausströmende Blasluft wird das Ablösen der Verpackungsmaterialbahn 110 von den Verpackungsmaterialbahn-Niederhaltern 14 unterstützt. Hierdurch wird sichergestellt, dass sich sehr leichte umhüllte Objekte oder Leersäcke zuverlässig von den Bearbeitungswerkzeugen lösen und nicht mit diesen weiterbewegt werden. Die Blasluftzufuhr kann kontinuierlich oder auch mittels einer geeigneten Steuerung intervallweise sein. Die Blasluft wird wenigstens im Bearbeitungsbereich unmittelbar nach der Bearbeitung zugeführt.

Die Objekt-Niederhalter 20 sind so geformt, dass sie das Objekt 100 gegen die Förderauflage 34 drücken können, wenn die Förderauflage 34 in ihre Ausgangslage zurückfedert und dem Objekt 100 einen Impuls nach oben bzw. zum Drehkörper 2 hin gibt. Die Objekt-Niederhalter 20 sind dazu in sich federnd oder federnd gelagert, insbesondere durch das elastische Element 21 gebildet, und können zum Drehzentrum M hin nachgeben.

Indem der Objekt-Niederhalter 20 fest mit dem jeweiligen Verpackungsmaterialbahn-Niederhalter 14 verbunden ist, bleibt der radiale Abstand b1 zu den Enden 14a der Niederhalter 14 konstant.

Die feste Verbindung mit dem Verpackungsmaterialbahn-Niederhalter 14 hat folgenden Effekt: Wenn sich das Werkzeug 10 dem Bearbeitungsbereich B nähert, sind die Objekt-Niederhalter 20 noch in einer Position, in der sie vom Drehzentrum M maximal weit entfernt sind. Sie können daher auf dem Objekt 100 abrollen, wenn das Werkzeug 10 in den Bearbeitungsbereich B einfährt. Durch den Gegendruck der Förderauflage 34 werden die Verpackungsmaterialbahn-Niederhalter 14 und damit die Objekt-Niederhalter 20 zum Drehzentrum M hin gedrückt. Der Bereich 21a ist daher vom Objekt 100 bzw. der darauf liegenden Materialbahn 110 beabstandet. Ein Straffziehen der Materialbahn 110 wird durch den Objekt-Niederhalter 20 nicht behindert. Beim Weiterdrehen löst sich die bearbeitungsaktive Zone 12 von der Materialbahn 110, der Druck auf die Verpackungsmaterialbahn-Niederhalter 14 lässt nach und die Verpackungsmaterialbahn-Niederhalter 14 werden mit den Objekt-Niederhaltern 20 wieder nach aussen bewegt. Die Objekt-Niederhalter 20 können die Objekte 100 dann wieder berühren und sicher positionieren. Zusätzlich führen die Objekt-Niederhalter 20 die Objekte 100 beim Nachlassen des Bearbeitungsdrucks und verhindern damit, dass sich die Objekte 100 von der Förderfläche 34 abheben. Die durch die nach oben federnde Förderauflage 34 ausgeübte, nach oben wirkende Kraft wird durch die Objekt-Niederhalter 20 wenigstens teilweise kompensiert.

Die hier gezeigten Objekten 100 haben eine Dicke b2, die kleiner als b1 ist. Der Objekt-Niederhalter 20 übt im Bearbeitungsbereich B nur dann Druck auf die Objekte 100 aus, wenn diese sehr stark zum Drehzentrum M hin zurückfedern.

Fig. 2 und 3a+b zeigen eine Variante der Vorrichtung 1 aus Fig. 1, bei der die Orientierung der Werkzeuge 10 relativ zum Drehkörper 2 mit einer Steuereinrichtung 40 gesteuert werden kann. Hierzu sind die Werkzeuge 10 schwenkbar am Drehkörper 2 angeordnet. Die Schwenkachse 41 geht jeweils durch die bearbeitungsaktive Zone 12. Die Orientierung wird eingestellt, indem die Werkzeuge 10 mit Hebeln 42 verbunden sind. Die Orientierung der Hebel 42 kann durch eine stationäre Steuerkulisse 46 variiert werden, indem mit den Hebeln 42 verbundene Steuerrollen 44 an der Steuerkulisse 46 abrollen. Durch die Steuerkulisse 46 wird die Kulissen-Umlaufbahn U2 festgelegt. Die Steuerkulisse 46 ist so geformt, dass die bearbeitungsaktive Zone 12 der Werkzeuge 10 vor dem Bearbeitungsbereich B in Umdrehungsrichtung gegenüber dem Werkzeugträger 13 vorlaufend und nach dem Bearbeitungsbereich B nachlaufend orientiert ist. Hierdurch kann das Werkzeug 10 gut auch zwischen dickeren Objekten 100 auf die Materialbahn aufsetzen.

Fig. 4 zeigt einen Ausschnitt aus der Vorrichtung gemäss Fig. 2 und 3a bei der Bearbeitung. Die Stellung des Werkzeugs 10 unmittelbar bei Beginn der Bearbeitung ist in durchgezogenen Linien gezeigt. Die Stellung des Werkzeugs 10 gegen Ende der Bearbeitung ist in gestrichelten Linien gezeigt. Man erkennt, dass das Werkzeug 100 an der Bearbeitungsstelle abrollt. Durch Blasluftzufuhr wird das Ablösen der Materialbahn vom Niederhalter 14 unterstützt.

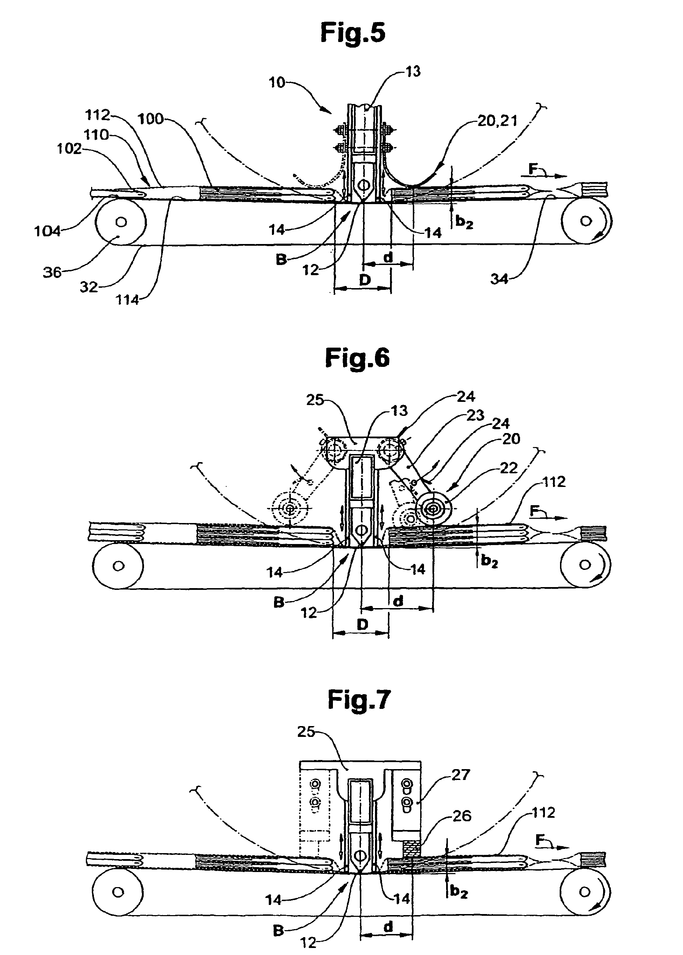

Fig. 5 zeigt den Bearbeitungsbereich B einer weiteren Vorrichtungsvariante. Die Werkzeuge 10 einschliesslich der Verpackungsmaterialbahn-Niederhalter 14 und der Objekt-Niederhalter 20 sind im Prinzip wie in den vorhergehenden Figuren aufgebaut mit dem folgenden Unterschied: Die Objekt-Niederhalter 20 sind nicht an den Verpackungsmaterialbahn-Niederhaltern 14 befestigt, sondern direkt am Werkzeugträger 13 der bearbeitungsaktiven Zone 12. Ihr Abstand zur bearbeitungsaktiven Zone 12 ist daher konstant und der Abstand zu den Verpackungsmaterialbahn-Niederhaltern 14 aufgrund deren federnder Lagerung variabel.

Die Form und Lage der Objekt-Niederhalter 20 relativ zum Werkzeugträger 13 ist so gewählt, dass Objekte 100 einer kritischen Dicke b2 (hier zwei übereinander liegende Einzelprodukte mit der Gesamtdicke b2) im Bearbeitungsbereich B leicht gegen die Förderauflage 34 gedrückt werden, ohne dass sich der Objekt-Niederhalter 20 stark verformt. Dünnere Objekte 100 werden in diesem Fall ebenfalls geführt gehalten, wenn sie von der Förderfläche 34 zurückfedern. Noch dickere Objekte 100 können ebenfalls zwischen Objekt-Niederhalter 20 und Förderfläche 34 aufgenommen und positioniert werden, wobei sich der Objekt-Niederhalter 20 entsprechend verformt.

Fig. 6 zeigt eine weitere Variante der Bearbeitungswerkzeuge 10 bzw. der Objekt-Niederhalter 20. Die Objekt-Niederhalter 20 sind hier als frei drehbare Rollen 22 ausgebildet. Diese sind mittels eines Hebels 23 schwenkbar direkt oder indirekt am Werkzeugträger 13 der bearbeitungsaktiven Zone 12 gelagert. Der Verpackungsmaterialbahn-Niederhaltern 14 ist relativ dazu federnd. Vorliegend ist ein Joch 25 vorhanden, das mit dem Werkzeugträger 13 fest verbunden ist und als Lagerung für den Hebel 23 dient. Der Hebel 23 ist federnd; eine Feder 24, z.B. eine Blatt- oder Spiralfeder, dient dazu, die Rolle 22 im unbelasteten Zustand zur bearbeitungsaktiven Zone 12 hin zu drücken. Entgegen dieser Federkraft ist der Hebel 23 unter Krafteinwirkung durch ein Objekt 100 in Richtung des gebogenen Pfeils verschiebbar. Im unbelasteten Zustand ist wiederum ein Abstand zwischen der bearbeitungsaktiven Zone 12 und der Rolle 22 eingestellt, der etwa einer kritischen Objektdicke entspricht. Der vorlaufende Objekt-Niederhalter 20 ist zusätzlich im unbelasteten Zustand gezeigt (gestrichelt dargestellt).

Diese Variante hat den Vorteil, dass der Objekt-Niederhalter 20 auf dem Objekt 100 bzw. dem oberen Materialbahnteil 112 abrollen kann. Das Objekt 100 bzw. der obere Materialbahnteil 112 wird daher beim Einfahren des Werkzeugs 10 in den Bearbeitungsbereich B oder beim Verlassen des Bearbeitungsbereichs B nicht in Förderrichtung verschoben oder auf andere Weise durch Reibung mit dem Objekt-Niederhalter 20 beeinträchtigt.

Im vorliegenden Fall sind die Objekte 100 Kleinstapel aus hier drei Einzelprodukten.

Fig. 7 zeigt ein weiteres Beispiel für Objekt-Niederhalter 20, hier in Form von komprimierbaren Stempeln 26, die über ein Verlängerungsstück 27 ebenfalls an einem Joch 25 gelagert sind. Die Verpackungsmaterialbahn-Niederhalter 14 sind relativ dazu beweglich. Der komprimierbare Stempel 26 besteht beispielsweise aus Schaumstoff. Er hat eine ebene Unterseite, mit welcher er flächig auf dem Objekt oder dem oberen Materialbahnbereich 112 aufliegt. Derartige Objekt-Niederhalter 20 sind konstruktiv sehr einfach und belasten das Objekt aufgrund der flächigen Wirkung relativ gleichmässig.

Auch in den Fällen von Fig. 5-7 wirken die Objekt-Niederhalter 20 in Förderrichtung gesehen in einem Abstand d von der bearbeitungsaktiven Zone 12, wobei d>D/2 (halber Objektabstand).

## Patentansprüche

1. Vorrichtung (1) zum Verpacken von flachen Objekten (100), insbesondere Druckereiprodukten, mit einem Verpackungsmaterial mittels wenigstens einer Verpackungsmaterialbahn (110), mit
- einer Fördereinrichtung (30) mit einer im Wesentlichen ebenen Förderfläche (34), welche imstande ist, die flachen Objekte (100) hintereinander und voneinander beabstandet in einer Förderrichtung (F) zu fördern;
- wenigstens einem Bearbeitungswerkzeug (10) mit einer bearbeitungswirksamen Zone (12), wobei das Bearbeitungswerkzeug (10) imstande ist, in einem Bearbeitungsbereich (B) der Vorrichtung (1) die Verpackungsmaterialbahn (110) im Bereich zwischen zwei Objekten (100) zu bearbeiten, wenn die Verpackungsmaterialbahn (110) die Objekte (100) beidseitig bedeckt, und wobei das Bearbeitungswerkzeug (10) zumindest senkrecht zur Förderfläche (34) beweglich ist;
- wenigstens einem Objekt-Niederhalter (20), der in Förderrichtung (F) nach der bearbeitungsaktiven Zone (12) des Bearbeitungswerkzeugs (10) auf das vorlaufende Objekt (100) zu wirken imstande ist, um dieses durch Niederhalten zu beruhigen,
**dadurch gekennzeichnet, dass** der Objekt-Niederhalter (20) am Bearbeitungswerkzeug (10) befestigt ist und das Bearbeitungswerkzeug (10) mit einer Bewegungskomponente in Förderrichtung beweglich ist.

2. Vorrichtung nach Anspruch 1, **dadurch gekennzeichnet, dass** der Objekt-Niederhalter (20) Objekte (100) gegen die Förderfläche (34) zu drücken imstande ist, insbesondere wenn deren Objektdicke oberhalb einer kritischen Objektdicke liegt.

3. Vorrichtung nach Anspruch 1 oder 2, **dadurch gekennzeichnet, dass** der Objekt-Niederhalter (20) ein elastisch verformbares Element (21, 26) umfasst und/oder federnd gelagert ist.

4. Vorrichtung nach Anspruch 3, **dadurch gekennzeichnet, dass** der Objekt-Niederhalter (20) Formelastizität aufweist, insbesondere durch ein gebogenes flächiges Formteil (21) gebildet ist.

5. Vorrichtung nach Anspruch 3, **dadurch gekennzeichnet, dass** der Objekt-Niederhalter (20) wenigstens eine federnd gelagerte, frei drehbare Rolle oder Walze (22) umfasst.

6. Vorrichtung nach einem der vorangegangenen Ansprüche, **dadurch gekennzeichnet, dass** der Objekt-Niederhalter (20) eine relativ zur Förderfläche (34) konkav gebogene Wirkfläche aufweist.

7. Vorrichtung nach einem der vorangegangenen Ansprüche, **dadurch gekennzeichnet, dass** wenigstens ein weiterer Objekt-Niederhalter (20) vorhanden ist, der in Förderrichtung vor der bearbeitungsaktiven Zone (12) des Bearbeitungswerkzeugs (10) auf das nachlaufende Objekte (100) zu wirken imstande ist.

8. Vorrichtung nach einem der vorangegangenen Ansprüche, **dadurch gekennzeichnet, dass** das Bearbeitungswerkzeug (10) den wenigstens einen Verpackungsmaterialbahn-Niederhalter (14) aufweist, welcher die Verpackungsmaterialbahn (110) im Bereich zwischen zwei Objekten (100) durch Ausüben einer Kraft auf einen oberen Bereich (112) der Verpackungsmaterialbahn (110) und dadurch auf einen unteren Bereich (114) der Verpackungsmaterialbahn (110) niederzuhalten imstande ist, bevor die bearbeitungsaktive Zone (12) des Bearbeitungswerkzeug (10) zum Bearbeiten unter Ausübung einer Kraft die Verpackungsmaterialbahn (110) drückt.

9. Vorrichtung nach Anspruch 8, **dadurch gekennzeichnet, dass** der Objekt-Niederhalter (20) am Verpackungsmaterialbahn-Niederhalter (14) befestigt ist und mit diesem relativ zur bearbeitungsaktiven Zone (12) des Bearbeitungswerkzeug (10) beweglich ist.

10. Vorrichtung nach Anspruch 8, **dadurch gekennzeichnet, dass** der Objekt-Niederhalter (20) an einem Werkzeugträger (13) für die bearbeitungsaktive Zone (12) des Bearbeitungswerkzeugs (10) befestigt ist, wobei der Verpackungsmaterialbahn-Niederhalter (14) relativ zum Objekt-Niederhalter (20) beweglich ist.

11. Vorrichtung nach einem der vorangegangenen Ansprüche, **dadurch gekennzeichnet, dass** die bearbeitungsaktive Zone (12) des Bearbeitungswerkzeugs (10) entlang einer geschlossenen Umlaufbahn (U1) bewegbar ist, welche im Bearbeitungsbereich (B) in unmittelbarer Nähe, vorzugsweise im Wesentlichen parallel, zur Förderfläche (34) verläuft, wobei die Orientierung der Werkzeuge (10) relativ zur Umlaufbahn (U1) vorzugsweise steuerbar ist, insbesondere mittels einer eine Kulissen-Umlaufbahn (U2) definierenden Steuerkulisse (46).

12. Vorrichtung nach einem der vorangegangenen Ansprüche, **dadurch gekennzeichnet, dass** das Bearbeitungswerkzeug (10) ausgebildet ist, um Verbindungen (S) zwischen einem der Förderfläche (34) abgewandten oberen Bereich (112) und einem der Förderfläche (34) zugewandten unteren Bereich (114) der Verpackungsmaterialbahn (110) im Bereich zwischen zwei Objekten (100) herzustellen.

13. Vorrichtung nach einem der vorangegangenen Ansprüche, **dadurch gekennzeichnet, dass** wenigstens eine Blasluftzuführung vorhanden ist, welche Blasluft zum Ablösen der Verpackungsmaterialbahn von Bearbeitungswerkzeug in den Bearbeitungsbereich einzublasen imstande ist, wobei die Blasluftzuführung vorzugsweise wenigstens eine Blasluftdüse (16) umfasst, welche am Verpackungsmaterialbahn-Niederhalter (14) angeordnet ist.

14. Vorrichtung nach Anspruch 13, **dadurch gekennzeichnet, dass** die Blasluft durch den Verpackungsmaterialbahn-Niederhalter (14) geleitet wird und gleichzeitig zu dessen Kühlung dient.

15. Verfahren zum Verpacken von Objekten (100), insbesondere Druckereiprodukten, mit Verpackungsmaterial mittels wenigstens einer Verpackungsmaterialbahn (110), mit den folgenden Schritten:
- Fördern der Objekte (100) hintereinander und voneinander beabstandet in einer Förderrichtung (F) durch einen Bearbeitungsbereich (B), wobei die Verpackungsmaterialbahn (110) die Objekte (100) beidseitig bedeckt;
- Bewegen des Bearbeitungswerkzeugs (10) im Bearbeitungsbereich (B) zumindest senkrecht zur Förderfläche (34);
- Bearbeiten der Verpackungsmaterialbahn (110) im Bereich zwischen zwei Objekten (100);
- Beruhigen wenigstens des in Förderrichtung (F) dem Bearbeitungsbereich (B) vorlaufenden Objekts (100) durch Niederhalten mit einem Objekt-Niederhalter (20);
**gekennzeichnet durch**
- Bewegen des Bearbeitungswerkzeugs (10) im Bearbeitungsbereich (B) mit einer Bewegungskomponente in Förderrichtung und synchrones Bewegen des am Bearbeitungswerkzeug befestigten Objekt-Niederhalters (20) mit dem Bearbeitungswerkzeug (10).

16. Verfahren nach Anspruch 15, **dadurch gekennzeichnet, dass** die bearbeitungsaktive Zone (12) des Bearbeitungswerkzeug (10) entlang einer geschlossenen Umlaufbahn (U1) bewegt wird, welche vor, im und nach dem Bearbeitungsbereich (B) in unmittelbarer räumlicher Nähe, vorzugsweise im Wesentlichen parallel zur Förderfläche (34) verläuft.

17. Verfahren nach Anspruch 15 oder 16, **dadurch gekennzeichnet, dass** die Objekte in Förderrichtung vor und/oder nach der bearbeitungsaktiven Zone (12) des Bearbeitungswerkzeugs (10) durch wenigstens einen Objekt-Niederhalter (20) niedergehalten werden.

18. Verfahren nach einem der Ansprüche 15 bis 17, **dadurch gekennzeichnet, dass** im Bearbeitungsbereich Blasluft die Verpackungsmaterialbahn eingeblasen wird, insbesondere durch eine Blasluftdüse (16), welche am Verpackungsmaterialbahn-Niederhalter (14) angeordnet ist und Blasluft im Wesentlichen senkrecht zur Verpackungsmaterialbahn ausstösst.

## Claims

1. A device (1) for packaging flat objects (100), in particular printed products, with a packaging material by way of at least one packaging material web (110) with
- a conveyor device (30) with an essentially plane conveyor surface (34) which is capable of conveying the flat objects (100) one after the other and distanced to one another, in a conveyor direction (F);
- at least one processing tool (10) with a processing-active zone (12), wherein the processing tool (10) is capable, in a processing region (B) of the device (1), of processing the packaging material web (110) in the region between two objects (100), when the packaging material web (110) covers the objects (100) on both sides, and wherein the processing tool (10) is movable at least perpendicularly to the conveyor surface (34);
- at least one object downholder (20), which, in a conveyor direction (F) after the processing-active zone (12) of the processing tool (10), is capable of acting upon the foremost object (100) in order to calm it by way of holding down,
**characterised in that** the object downholder (20) is fastened on the processing tool (10), and that the processing tool (10) is movable with a movement component in a conveyor direction (F).

2. A device according to claim 1, **characterised in that** the object downholder (20) is capable of pressing objects (100) against the conveyor surface (34), in particular if their object thickness lies above a critical object thickness.

3. A device according to claim 1 or 2, **characterised in that** the object downholder (20) comprises an elastically deformable element (21, 26) and/or is mounted resiliently.

4. A device according to claim 3, **characterised in that** the object downholder (20) has a shape elasticity, in particular by way of a bent, surfaced shape part (21).

5. A device according to claim 3, **characterised in that** the object downholder (20) comprises at least one resiliently mounted, freely rotatable roll or roller (22).

6. A device according to one of the preceding claims, **characterised in that** the object downholder (20) has an active surface which is concavely bent relative to the conveyor surface (34).

7. A device according to one of the preceding claims, **characterised in that** at least one further object downholder (20) is present, which, in the conveyor direction (F) before the processing-active zone (12) of the processing tool (10), is capable of acting upon the ensuing objects (100).

8. A device according to one of the preceding claims, **characterised in that** the processing tool (10) comprises at least one packaging material web downholder (14), which is capable of holding down the packaging material web (110) in the region between two objects (100) by way of exerting a force onto an upper region (112) of the packaging material web (110), and by way of this, onto a lower region (114) of the packaging material web (110), before the processing-active zone (12) of the processing tool (10) for processing presses the packaging material web (110) whilst exerting a force.

9. A device according to claim 8, **characterised in that** the object downholder (20) is fastened on the packaging material web downholder (14) and is movable with this relative to the processing active zone (12) of the processing tool (10).

10. A device according to claim 8, **characterised in that** the object downholder (20) is fastened on a tool carrier (13) for the processing-active zone (12) of the processing tool (10), wherein the packaging material web downholder (14) is movable relative to the object downholder (20).

11. A device according to one of the preceding claims, **characterised in that** the processing-active zone (12) of the processing tool (10) is movable along a closed revolving path (U1), which in the processing region (B) runs in the direct proximity of, and preferably essentially parallel to, the conveyor surface (34), wherein the orientation of the tools (10) relative to the revolving path (U1) is preferably controllable, in particular by way of a control cam (46) defining a cam revolving path (U2).

12. A device according to one of the preceding claims, **characterised in that** the processing tool (10) is designed in order to create connections (S) in the region between two objects (100), between an upper region (112) which is facing away from the conveyor surface (34), and a lower region (114) of the packaging material web (110), which faces the conveyor surface (34).

13. A device according to one of the preceding claims, **characterised in that** at least one blow air feed is present, which is capable of blowing blow air for releasing the packaging material web from the processing tool, into the processing region, wherein the blow air feed preferably comprises at least one blow air nozzle (16), which is arranged on the packaging material web downholder (14).

14. A device according to claim 13, **characterised in that** the blow air is led through the packaging material web downholder (14) and simultaneously serves for its cooling.

15. A method for packaging objects (100), in particular printed products, with packaging material by way of at least one packaging material web (110), with the following steps:
- conveying objects (100), one after the other and distanced to one another, in a conveyor direction (F) through a processing region (B), wherein the packaging material web (110) covers the objects (100) on both sides;
- moving the processing tool (10) in the processing region (B) at least perpendicularly to the conveyor surface (34);
- processing the packaging material web (110) in the region between two objects (100),
- calming at least the object (10) foremost to the processing region in the conveyor direction (F) by way of holding down with an object downholder (20).
**characterised in that**
- moving the processing tool (10) in the processing region (B) with a movement component in the conveyor direction and moving the object downholder (20) fastened on the processing tool (10) synchronously with the processing tool (10).

16. A method according to claim 15, **characterised in that** the processing-active zone (12) of the processing tool (10) is moved along a closed revolving path (U1), which in front of, in and after the processing region (B), runs in the direct spatial proximity of, preferably essentially parallel to, the conveyor surface (34).

17. A method according to one of the claims 15 or 16, **characterised in that** the objects in the conveyor direction are held down by way of at least one object downholder (20) in front of, and/or after the processing-active zone (12) of the processing tool (10).

18. A method according to one of the claims 15 to 17, **characterised in that** in the processing region, blow air is blown into the packaging material web, in particular by way of a blow air nozzle (16) which is arranged on the packaging material web downholder (14) and ejects blow air essentially perpendicularly to the packaging material web.

## Revendications

1. Ensemble (1) d'emballage d'objets plats (100), en particulier de produits d'imprimerie, dans un matériau d'emballage au moyen d'au moins une bande (110) de matériau d'emballage, l'ensemble présentant :
un dispositif de transport (30) doté d'une surface de transport (34) essentiellement plane et apte à transporter les objets plats (100) les uns derrière les autres et à distance mutuelle dans une direction de transport (F),
au moins un outil de traitement (10) doté d'une zone active de traitement (12), l'outil de traitement (10) étant apte à traiter dans une partie de traitement (B) de l'ensemble (1) la bande (110) de matériau d'emballage située entre deux objets (100) lorsque la bande (110) de matériau d'emballage couvre les objets (100) des deux côtés, l'outil de traitement (10) pouvant être déplacé au moins perpendiculairement à la surface de transport (34),
au moins un dispositif (20) d'abaissement d'objet apte à agir sur l'objet (100) qui avance dans la direction de transport (F) après la zone active de traitement (12) de l'outil de traitement (10) pour calmer l'objet en l'abaissant,
**caractérisé en ce que**
le dispositif (20) d'abaissement d'objet est fixé sur l'outil de traitement (10) et
**en ce que** l'outil de traitement (10) peut être déplacé avec une composante de déplacement dans la direction de transport.

2. Dispositif selon la revendication 1, **caractérisé en ce que** le dispositif (20) d'abaissement d'objet est apte à repousser les objets (100) contre la surface de transport (34) en particulier lorsque leur épaisseur est supérieure à une épaisseur critique.

3. Dispositif selon les revendications 1 ou 2, **caractérisé en ce que** le dispositif (20) d'abaissement d'objet comporte un élément élastiquement déformable (21, 26) et/ou est monté élastiquement.

4. Dispositif selon la revendication 3, **caractérisé en ce que** le dispositif (20) d'abaissement d'objet présente une élasticité de forme et en particulier est formé par une pièce moulée (21) plate et courbée.

5. Dispositif selon la revendication 3, **caractérisé en ce que** le dispositif (20) d'abaissement d'objet présente au moins un rouleau ou cylindre (22) à rotation libre et monté élastiquement.

6. Ensemble selon l'une des revendications précédentes, **caractérisé en ce que** le dispositif (20) d'abaissement d'objet présente une surface active dont la courbure est concave par rapport à la surface du transport (34).

7. Ensemble selon l'une des revendications précédentes, **caractérisé en ce qu'**il présente au moins un autre dispositif (20) d'abaissement d'objet en amont de la zone active de traitement (12) de l'outil de traitement (10) qui est apte à agir sur les objets (100) en aval de cet autre dispositif (20) d'abaissement d'objet.

8. Ensemble selon l'une des revendications précédentes, **caractérisé en ce que** l'outil de traitement (10) présente le ou les dispositifs (14) d'abaissement de la bande de matériau d'emballage aptes à abaisser la bande (110) de matériau d'emballage entre deux objets (100) en exerçant une force sur la partie supérieure (112) de la bande (110) de matériau d'emballage et donc sur une partie inférieure (114) de la bande (110) de matériau d'emballage avant que la zone active de traitement (12) de l'outil de traitement (10) pousse la bande (110) de matériau d'emballage pour la traiter en exerçant une force.

9. Dispositif selon la revendication 8, **caractérisé en ce que** le dispositif (20) d'abaissement d'objet est fixé sur le dispositif (14) d'abaissement de la bande de matériau d'emballage et peut être déplacé avec ce dernier par rapport à la zone active de traitement (12) de l'outil de traitement (10).

10. Dispositif selon la revendication 8, **caractérisé en ce que** le dispositif (20) d'abaissement d'objet est fixé sur un porte-outil (13) de la zone active de traitement (12) de l'outil de traitement (10), le dispositif (14) d'abaissement de la bande de matériau d'emballage pouvant être déplacé par rapport au dispositif (20) d'abaissement d'objet.

11. Ensemble selon l'une des revendications précédentes, **caractérisé en ce que** la zone active de traitement (12) de l'outil de traitement (10) peut être déplacée sur une piste (U1) en boucle fermée qui s'étend à proximité immédiate et de préférence essentiellement en parallèle à la surface de transport (34) dans la partie de traitement (B), l'orientation des outils (10) par rapport à la piste en boucle (U1) pouvant de préférence être contrôlée, en particulier au moyen d'un coulisseau de commande (46) qui définit une piste en boucle (U2) de coulisseau.

12. Ensemble selon l'une des revendications précédentes, **caractérisé en ce que** l'outil de traitement (10) est configuré pour établir entre deux objets (100) des liaisons (S) entre une partie supérieure (112), non tournée vers la surface de transport (34) et une partie inférieure (114), tournée vers la surface de transport (34), de la bande (110) du matériau d'emballage.

13. Ensemble selon l'une des revendications précédentes, **caractérisé en ce qu'**au moins une amenée d'air de soufflage est prévue et est apte à souffler de l'air de soufflage dans la partie de traitement pour libérer la bande de matériau d'emballage de l'outil de traitement, l'amenée d'air de soufflage comportant de préférence au moins une tuyère (16) d'air de soufflage disposée sur le dispositif (14) d'abaissement de la bande de matériau d'emballage.

14. Dispositif selon la revendication 13, **caractérisé en ce que** l'air de soufflage est amené à travers le dispositif (14) d'abaissement de la bande de matériau d'emballage et sert en même temps à le refroidir.

15. Procédé d'emballage d'objet (100), en particulier de produits d'imprimerie, dans un matériau d'emballage et au moyen d'au moins une bande (110) de matériau d'emballage, le procédé présentant les étapes suivantes :
transporter les objets (100) les uns derrière les autres et à distance mutuelle dans une direction de transport (F) dans une partie de traitement (B), la bande (110) de matériau d'emballage recouvrant les objets (100) sur leurs deux côtés,
déplacer l'outil de traitement (10) dans la partie de traitement (B), au moins perpendiculairement à la surface de transport (34),
traiter la bande (110) de matériau d'emballage entre deux objets (100),
calmer au moins l'objet (100) qui avance dans la direction d'emballage (F) en amont de la partie de traitement (B) en l'abaissant à l'aide d'un dispositif (20) d'abaissement d'objet,
**caractérisé par** les étapes qui consistent à :
déplacer l'outil de traitement (10) dans la partie de traitement (B) avec une composante de déplacement dans la direction de transport et déplacer le dispositif (20) d'abaissement d'objet fixé sur l'outil de traitement (10) de manière synchronisée avec l'outil de traitement (10).

16. Procédé selon la revendication 15, **caractérisé en ce que** la zone active de traitement (12) de l'outil de traitement (10) est déplacée sur une piste (U1) en boucle fermée qui s'étend à proximité directe de la surface de transport (4) avant, dans et après la partie de traitement (B) et qui s'étend de préférence essentiellement en parallèle à la surface de transport (4) avant, dans et après la partie de traitement (B).

17. Procédé selon les revendications 15 ou 16, **caractérisé en ce que** les objets sont abaissés par au moins un dispositif (20) d'abaissement d'objet avant et/ou après la zone active de traitement (12) de l'outil de traitement (10) dans la direction de transport.

18. Procédé selon l'une des revendications 15 à 17, **caractérisé en ce que** dans la partie de traitement, de l'air de soufflage est soufflé sur la bande de matériau d'emballage, en particulier par une tuyère (16) de soufflage d'air disposée sur le dispositif (14) d'abaissement de la bande de matériau d'emballage, l'air de soufflage étant projeté essentiellement à la perpendiculaire sur la bande de matériau d'emballage.
